Europäisches Patentamt

European Patent Office

Office européen des brevets

(11) Publication number: **0 207 899 B1**

# EUROPEAN PATENT SPECIFICATION

(45) Date of publication of patent specification: **02.09.92**   (51) Int. Cl.⁵: **A23B 5/04**, A23L 3/36

(21) Application number: **86830142.5**

(22) Date of filing: **27.05.86**

---

(54) **Plant and process for defrosting blocks of food products.**

---

(30) Priority: **28.05.85 IT 6748885**

(43) Date of publication of application:
**07.01.87 Bulletin 87/02**

(45) Publication of the grant of the patent:
**02.09.92 Bulletin 92/36**

(84) Designated Contracting States:
**AT BE CH DE FR GB IT LI LU NL SE**

(56) References cited:
**FR-A- 1 527 724**        **FR-A- 1 537 809**
**US-A- 1 940 353**        **US-A- 2 373 682**
**US-A- 2 429 909**        **US-A- 2 478 893**
**US-A- 3 182 699**        **US-A- 3 636 308**

(73) Proprietor: **TERMIL di Rinaldi, Scarlata & C. S.n.c.**
**Via IV Novembre 50**
**I-12050 S. Giuseppe di Castagnito (Cuneo)(IT)**

(72) Inventor: **Scarlata, Lucio**
**Via IV Novembre 48**
**I-12050 San Giuseppe di Castagnito Cuneo(IT)**

(74) Representative: **Notaro, Giancarlo et al**
**c/o Jacobacci-Casetta & Perani S.p.A. Via Alfieri, 17**
**I-10121 Torino(IT)**

---

Rank Xerox (UK) Business Services

# Description

The present invention relates to a plant for defrosting blocks of food products, particularly deep-frozen eggs, of the type including a flaking roller and means for thawing the flakes, as well as to a process carried out by this plant.

Deep-frozen blocks of food products must be defrosted in short times so as to avoid alteration of the products and render the process economically advantageous. Defrosting at ambient temperatures or in heated chambers has the disadvantages of considerably long operating times, the possibility of contamination due to the manual handling, and of regulation by operators.

In order to shorten the operating times, defrosting systems have been adopted which use thawing grids and heated Archimedean screws. Such systems have sizeable hot surfaces with which the deep-frozen product is in contact. This essentially static contact may cause irreversible changes when the product has a high protein content, for example as in egg yolks. These changes may, moreover, cause clogging of the thawing grids or of the heated screws.

Another defrosting method is that which uses rollers having blades for flaking the deep-frozen products. US-A-3182699 and US-A-2429909 disclose machines which perform the above method. The flakes are subsequently thawed in systems similar to the thawing grids and hence with the same problems. Moreover, the storage of the product, because of the presence of unthawed flakes, may result in large solid masses collecting in the tank, with considerable problems as regards the pumping of the product for use.

The object of the present invention is to provide a highly automated plant for defrosting blocks of food products which does not have these disadvantages and which at the same time is cheap to make.

A further object of the present invention is to provide a process for defrosting blocks of food products which, as well as not having the aforesaid problems, is quick and safe from the point of view of lack of changes in the defrosted product.

According to the invention this is achieved by virtue of the fact that the means for thawing the flakes include a tank for collecting the flakes, a heat exchanger of the concentric-tube type, a series of mesh filter elements within the tube of the exchanger in which the product flows, the filter elements having meshes which decrease progressively in size in the direction of advance of the product, and means for transferring the flakes and the thawed product to the heat exchanger and for recirculating them to the collecting tanks so as to achieve rapid thawing of the product with a uniform temperature in the liquid mass slightly above freezing.

By virtue of these characteristics, the thawing of the product occurs at temperatures such as not to cause irreversible changes in the product itself in that the high coefficient of heat exchange achieved in the heat exchanger allows the use of heating fluids at lower temperatures than in known heating systems with hot walls. Furthermore, the high turbulence achieved in the heat exchanger enables any localised temperature increases in the product to be avoided, ensuring that the heat exchanged substantially balances the latent heat of thawing of the treated product.

The plant according to the invention has the advantage that the flakes are partly broken up, even though solid, by the mesh filter elements under the pressure exerted by the pump means. The breaking of the flakes considerably reduces their thermal capacity and thus also reduces the time and degree of recirculation necessary to achieve complete thawing of the product.

According to the invention, the collecting tank has agitators and is provided at its upper end with a sprinkler-diffuser through which the product is recirculated.

This avoids the possible formation of solid masses within the tank and ensures that there is a sufficient head of liquid in the bottom of the tank itself for the pump means to recirculate the product.

According to the invention, the defrosting process is characterised in that the thawing of the flakes is achieved by the pumping of the flakes and the thawed product from the collecting tank to a heat exchanger of the concentric-tube type including a series of mesh filter elements within the tube of the exchanger in which the product flows, such filter elements having meshes which decrease progressively in size in the direction of advance of the product, the recirculation of the product from the exchanger to the tank until the product has thawed to the desired extent, and the removal of the product itself.

Further advantages and characteristics of the plant and the process according to the present invention will become clear from the detailed description which follows, purely by way of example, with reference to the appended drawings, in which:

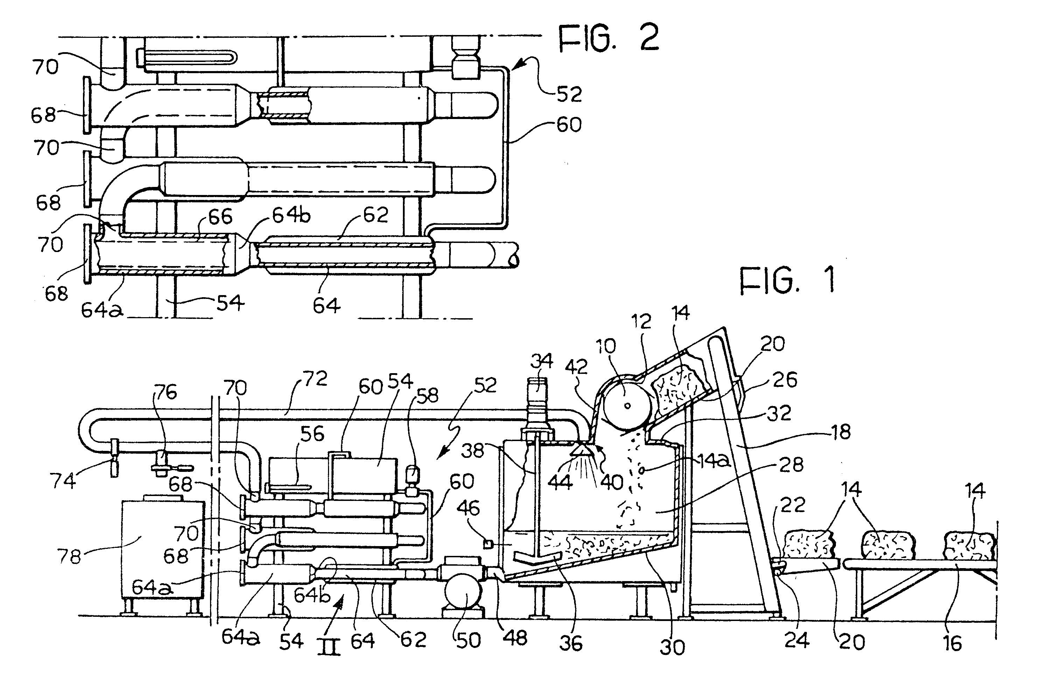

Figure 1 is a schematic partially-sectioned side view of the plant, and

Figure 2 is an enlarged detail of Figure 1.

With reference to the drawings, there is shown a flaking roller 10 with circumferential blades 12. Deep-frozen blocks 14 are fed automatically to the roller 10 by means of a conveyor belt 16, a tipper-elevator 18, and an inclined plane 20. The tipper-elevator 18 has a loading plane 20 articulated at 22 to the elevator 18 and provided with idle wheels 24 resting on suitable guides of the elevator 18.

The elevator 18 has cam surfaces 26 close to the inclined plane 20 and in correspondence with the guides.

The flaking roller 10 is located above a closed tank 28 having an inclined bottom 30 and an upper wall 32. A motor 34 is fixed to the outside of the wall 32 and, during operation of the plant, drives a bladed agitator 36 through a vertical shaft 38.

The wall 32 has an aperture 40 in correspondence with a duct 42 enclosing the flaking roller 10. In its upper part, the tank 28 has a sprinkler-diffuser 44 supported by the wall 32. The tank 28 also has a level sensor 46 located on a side wall at a height slightly above the agitator 36.

In the lowest part of the inclined bottom 30, the tank 28 has a discharge pipe 48 which connects the tank itself to a hollow-bodied volumetric pump 50. The delivery of the pump 50 is connected to a concentric-tube heat exchanger 52 supported by a structure 54. The exchanger 52 includes a thermostatically-controlled vessel 54 for the heating fluid, normally water, heated by an electrical resistance 56. The heating fluid is circulated in jackets 62 surrounding the central tube 64 by means of a recirculating pump 58 and tubing 60. The central tube 64 of the exchanger 52 has larger-diameter portions 64a around which there is no heating jacket 62. The portions 64a are connected to the preceding tube 64 (in the direction of flow of the product) by frusto-conical connectors 64b and house tubular mesh filter elements 66 of the same diameter as the internal tube 64 of the exchanger 52.

At their ends opposite the frusto-conical connectors 64b, the portions 64a have blind closure flanges 68 and connectors 70 perpendicular to the side walls of the portions 64a. Each filter element 66 is in contact at one end with the tube 64 of the exchanger and at its other end with the blind flange 68.

The plant illustrated in the drawing has three identical portions 64a, the only difference relating to the tubular filter elements 66 which have mesh sizes that decrease from the first to the third element.

At the outlet of the last portion 64a of the heat exchanger 52 there is a recirculating tube 72 which connects the exchanger itself to the diffuser 44 of the collecting tank 28. The tube 72 includes an on-off valve 74 and a valve 76 for delivery of the product into a storage tank 78 for the thawed product.

During operation of the plant, the deep-frozen blocks 14 are advanced stepwise on the conveyor belt 16 and are loaded onto the plane 20 of the elevator 18 which raises the blocks themselves to the level of the flaking roller 10. Close to the cam surfaces 26, the wheels 24 of the plane 20 engage the cams so as to rotate the plane 20 about the articulation axis 22 whereby the blocks 14 slide by gravity onto the inclined plane 20 and bear against the roller 10 driven by a motor (not illustrated). The roller 10 reduces the blocks 14 to flakes 14a by means of the blades 12 and the flakes fall onto the inclined bottom of the tank 28.

During the starting phase of the plant, a sufficient head of liquid (water or thawed product) will be provided in the tank 28 to enable the volumetric pump 50 to be started.

The agitator 36 maintains a uniform suspension of flakes in the liquid without danger of the formation of solid masses because of the low temperature of the flakes. Indeed, the temperature of the blocks 14 and hence of the flakes 14a is of the order of -20°C, whereby, in the absence of agitation, the flakes could cause part of the liquid in contact with them in the tank 28 to freeze and render the operation of the plant problematical.

The suspension of solid flakes and liquid product is pumped to the exchanger 52 in which the heating fluid is kept at a temperature of between 20 and 40°C. The pumped product is filtered through the first tubular mesh filter element 66 in which the flakes of product undergo a first crushing, being forced through the filter mesh by the pressure exerted by the pump 50. On leaving the filter portion 64a through the connector 70, the product undergoes further heating as it passes through a second section of the exchanger 52 and reaches the second portion 64a in which the product is filtered through a finer-mesh element 66. The same applies to the third heating section and the third filter portion.

On leaving the exchanger 52, the suspension will thus contain a smaller percentage of solids due to thawing as a result of the heat exchange and smaller flakes due both to the thawing and particularly to the crushing as a result of the forcing through the filter element 66 by the pressure of the pump 50. The product thus transformed is recirculated to the tank 28 through the sprinkler-diffuser 44 which, together with the agitator 36, avoids the formation of solid masses.

When the product has thawed to the desired extent, the valve 74 is closed and the valve 76 is opened to transfer the product to the storage tank 78. The transfer will be effected as long as the level control 46 does not indicate a minimum level within the tank 28 to enable the starting of the defrosting of a further batch of blocks 14. The probe 46 may intervene automatically to stop the operation of the pump 50.

In addition to the semi-continuous operation just described, the plant is suitable for continuous operation subject to accurate regulation and control of all the variables in play. Equally, the product delivered may be sent directly for use instead of to the storage tank.

With the heating fluid at a temperature of the order of 30°, the product leaving the plant has a temperature of about 1 to 2° C, thus ensuring the absence of any thermal changes in the product. Moreover, the automatic operation of the plant minimises the possibility of accidental contamination of the product.

The plant also has an automatic washing unit (not illustrated) which automatically directs a liquid containing detergent into the tank 28 and along all the tubes of the plant when the plant itself has finished operating.

## Claims

1. Plant for defrosting blocks (14) of food products, particularly deep-frozen eggs, of the type comprising a flaking roller (10) and means for thawing the flakes (14a), characterised in that these means comprise:
   - a tank (28) for collecting the flakes,
   - a heat exchanger (52) of the concentric-tube type,
   - a series of mesh filter elements (66) within the tube (64, 64a) of the exchanger (52) in which the product flows, the filter elements (66) having meshes which decrease progressively in size in the direction of advance of the product,
   - means (48, 50, 72, 44) for transferring the flakes (14a) and the thawed product to the heat exchanger and for recirculating them to the collecting tank, so as to thaw the product quickly without localised temperature increases within the liquid mass.

2. Plant according to Claim 1, characterised in that the collecting tank (28) has an agitator (36) and is provided at its upper end with a sprinkler-diffuser (44) through which the product is recirculated.

3. Plant according to Claim 1, characterised in that the means for transferring the flakes and the thawed product include a volumetric pump (50) for pumping liquids with solids in suspension, a delivery tube from the tank (28) to the exchanger (52), and a recirculating tube (72) from the exchanger (52) to the tank (28).

4. Plant according to any one of the preceding claims, characterised in that it includes a belt conveyor (16) and a tipper-elevator (18) for the automatic supply of the blocks (14) to the flaking roller (10).

5. Plant according to any one of the preceding claims, characterised in that the collecting tank (28) includes a level sensor (46) by which the pump means (50) are governed.

6. Plant according to any one of the preceding claims, characterised in that it further includes an automatic washing unit which operates at the end of the working cycle.

7. Process for defrosting blocks (14) of food products, particularly deep-frozen eggs, by using a plant according to any one of the preceding claims, of the type including the steps of reducing the blocks to the flakes (14a) and thawing the flakes themselves, characterised in that the thawing is achieved by means of pumping the flakes and the thawed product from a collecting tank (28) to a heat exchanger (52) of the concentric-tube type including a series of mesh filter elements (66) within the tube (64, 64a) of the exchanger (52) in which the product flows, such filter elements (66) having meshes which decrease progressively in size in the direction of advance of the product, recirculating the product from the exchanger to the tank until the product has thawed to the desired extent, and removing the product itself.

## Patentansprüche

1. Anlage, um Blöcke (14) von Nahrungsmittelprodukten aufzutauen, insbesonders tiefgefrorene Eier, mit einer Flockenabschälrolle (10) sowie einer Vorrichtung, um die Flocken (14a) aufzutauen, **dadurch gekennzeichnet**, daß diese Vorrichtung enthält:

   einen Behälter (28) zum Sammeln der Flocken, einen Wärmetauscher (52) mit konzentrischen Rohren, eine Reihe von Maschenfilterelementen (66) innerhalb des Rohres (64, 64a) des Tauschers (52), in dem das Produkt fließt, wobei die Filterelemente (66) Maschen besitzen, deren Größe in der Vorschubrichtung des Produkts allmählich abnimmt, eine Vorrichtung (48, 50, 72, 44), um die Flocken (14a) sowie das aufgetaute Produkt zum Wärmetauscher zu übertragen und sie zum Sammelbehälter wieder in Umlauf zu bringen, um das Produkt ohne örtlich begrenzte Temperaturanstiege in der flüssigen Masse rasch aufzutauen.

**2.** Anlage nach Anspruch 1, **dadurch gekennzeichnet**, daß der Sammelbehälter (28) ein Rührwerk (36) besitzt und an seinem oberen Ende mit einem Berieselungsverteiler (44) versehen ist, über den das Produkt wieder in Umlauf gebracht wird.

**3.** Anlage nach Anspruch 1, **dadurch gekennzeichnet**, daß die Vorrichtung zur Übertragung der Flocken und des aufgetauten Produkts eine volumetrische Pumpe (50), um Flüssigkeiten umzupumpen, in denen Festkörper aufgeschlämmt sind, eine Förderleitung vom Behälter (28) zum Tauscher (52) sowie eine Wiederumlaufleitung (72) vom Tauscher (52) zum Behälter (28) aufweist.

**4.** Anlage nach allen bisherigen Ansprüchen, **dadurch gekennzeichnet**, daß sie einen Bandförderer (16) sowie einen Kippförderer (18) aufweist, um der Flockenabschälrolle (10) die Blöcke (14) automatisch zuzuführen.

**5.** Anlage nach allen bisherigen Ansprüchen, **dadurch gekennzeichnet**, daß der Sammelbehälter (28) einen Niveaufühler (46) aufweist, mit dem die Pumpenvorrichtung (50) gesteuert wird.

**6.** Anlage nach allen bisherigen Ansprüchen, **dadurch gekennzeichnet,** daß sie weiters eine automatische Wascheinheit aufweist, die am Ende des Arbeitsintervalls in Betrieb steht.

**7.** Verfahren, um unter Verwendung einer Vorrichtung nach einem der vorangegangenen Ansprüche Blöcke (14) von Nahrungsmittelprodukten aufzutauen, insbesonders tiefgefrorene Eier, wobei das Verfahren Schritte enthält, in denen die Blöcke in Flocken (14a) zerkleinert und die Flocken selbst aufgetaut werden, **dadurch gekennzeichnet,** daß das Auftauen dadurch erfolgt, daß die Flocken und das aufgetaute Produkt von einem Sammelbehälter (28) zu einem Wärmetauscher (52) mit konzentrischen Rohren gepumpt werden, der eine Reihe von Maschenfilterelementen (66) innerhalb des Rohres (64, 64a) des Wärmetauscher (52), in dem das Produkt fließt, wobei die Filterelemente (66) Maschen besitzen, deren Größe in der Vorschubrichtung des Produktes allmählich abnimmt, das Produkt vom Wärmetauscher zum Behälter wieder in Umlauf gebracht wird, bis das Produkt bis zum gewünschten Grad aufgetaut ist und das Produkt selbst entfernt wird.

**Revendications**

**1.** Installation pour la décongélation de blocs (14) de produits alimentaires, en particulier d'oeufs surgelés, du type comprenant un rouleau de réduction en paillettes (10) et des moyens de décongélation des paillettes (14a), caractérisée en ce que ces moyens comprennent :
   - un réservoir (28) pour recueillir les paillettes,
   - un échangeur de chaleur (52), du type à tube concentrique,
   - une série d'éléments filtrants en toile métallique (66) à l'intérieur du tube (64,64a) de l'échangeur (52) dans lequel s'écoule le produit, les éléments filtrants (66) ayant des mailles dont la taille va en diminuant progressivement, dans le sens de progression du produit,
   - des moyens (48,50,72,44) pour transférer les paillettes (14a) et le produit décongélé à l'échangeur de chaleur et pour les recycler vers le réservoir de réception de façon à décongeler rapidement le produit sans hausse de température localisée au sein de la masse liquide.

**2.** Installation selon la revendication 1, caractérisée en ce que le réservoir de réception (28) comporte un agitateur (36) et est muni à son extrémité supérieure d'un arroseur-diffuseur (44) à travers lequel le produit est recyclé.

**3.** Installation selon la revendication 1, caractérisée en ce que les moyens pour transférer les paillettes et le produit décongelé comprennent une pompe volumétrique (50), pour le pompage de liquides contenant des solides en suspension, un tube d'envoi allant du réservoir (28) à l'échangeur (52) et un tube de recyclage (72) allant de l'échangeur (52) au réservoir (28).

**4.** Installation selon l'une quelconque des revendications précédentes, caractérisée en ce qu'elle comporte un transporteur à courroie (16) et un élévateurbasculeur (18) pour l'amenée automatique des blocs (14) au rouleau de réduction en paillettes (10).

**5.** Installation selon l'une quelconque des revendications précédentes, caractérisée en ce que le réservoir de réception (28) comporte un détecteur de niveau (46) régulateur des moyens de pompage (50).

**6.** Installation selon l'une quelconque des revendications précédentes, caractérisée en ce qu'elle comporte encore un groupe de lavage automatique qui agit à la fin du cycle de travail.

7. Procédé pour la décongélation de blocs de produits alimentaires, en particulier d'oeufs surgelés, utilisant une installation selon l'une quelconque des revendications précédentes, du type comportant les étapes de réduction des blocs en paillettes (14a) et de décongélation des paillettes elles-mêmes, caractérisé en ce que la décongélation est assurée par pompage des paillettes et du produit décongelé depuis un réservoir de réception (28) jusqu'à un échangeur de chaleur (52), du type à tube concentrique, comprenant une série d'éléments filtrants en toile métallique (66) à l'intérieur du tube (64,64a) de l'échangeur (52) dans lequel s'écoule le produit, ces éléments filtrants (66) ayant des mailles dont la taille va en diminuant progressivement, dans le sens de progression du produit, recyclage du produit de l'échangeur au réservoir, jusqu'à ce que le produit soit décongelé au degré souhaité, et enlèvement du produit lui-même.

FIG. 1

FIG. 2

7